# EUROPÄISCHE PATENTSCHRIFT

(11) **EP 0 513 952 B1**
(45) Veröffentlichungstag und Bekanntmachung des Hinweises auf die Patenterteilung: **15.10.1997**
(21) Anmeldenummer: 92250115.0
(22) Anmeldetag: 08.05.1992
(51) Int. Cl.: G06F 11/00

(54) **Schaltung zur Störungserfassung für eine elektronische Baugruppe**
Disturbance detecting circuit for an electronic assembly
Circuit de détection de défaillance pour un ensemble électronique

(30) Priorität: 08.05.1991 DE 4115432
(43) Veröffentlichungstag der Anmeldung: 19.11.1992
(73) Patentinhaber: EAC AUTOMATION-CONSULTING-GmbH, D-13589 Berlin (DE)
(72) Erfinder: Wagner, Gerhard, Dipl.-Ing., W-1000 Berlin 28 (DE)
(74) Vertreter: Christiansen, Henning, Dipl.-Ing.

(56) Entgegenhaltungen:
- DE-C- 3 639 430
- US-A- 3 746 981
- PATENT ABSTRACTS OF JAPAN vol. 13, no. 5 (E-701)1. September 1989

## Beschreibung

Die Erfindung betrifft eine Schaltung der im Oberbegriff des Anspruchs 1 angegebenen Art.

Derartige Schaltungen sind insbesondere auf dem Gebiet der industriellen Steuerungstechnik und auch bei Datenverarbeitungsanlagen von Bedeutung, um bei einem aufgetretenen Störfall nachträglich eine Aussage darüber zu erhalten, ob als Ursache für den Störungszustand einer Baugruppe eine von außen in das System gelangte Störbeeinflussung in Betracht zu ziehen ist.

Leitungsgebundene Störungen, wie Überspannungen und dergleichen, werden üblicherweise insbesondere dadurch festgehalten, daß eine Sicherung anspricht und eine bleibende Leitungsunterbrechung bewirkt. Das Ansprechen der Sicherung bildet dabei gleichzeitig eine Störungsanzeige, verbunden mit einem Abschalten der entsprechend geschützten Baugruppe aus Sicherheitsgründen. Nach Beseitigung der Störungsursache wird dann die Sicherung ersetzt bzw. wiedereingeschaltet. Die Sicherung selbst gibt dabei indirekt Aufschluß über die Störungsursache.

Eine derartige Maßnahme versagt aber bei nicht leitungsgebundenen Störungen, welche zu Ausfällen von, insbesondere Prozessoren enthaltenden, elektronischen Baugruppen führen können. Hierbei sind Garantie- und Schadensersatzforderungen vielfach davon abhängig, ob eine betreffende Störung innerhalb oder außerhalb einer Baugruppe ihre Ursache hatte. Im letztgenannten Fall ist der Hersteller der Baugruppe in der Regel nicht für den eingetretenen Schaden verantwortlich.

Da Sicherungen gegen Überspannungen oder -ströme normalerweise mit einer Abschaltvorrichtung für die zu schützende Schaltung verbunden sind, geht die zu schützende Schaltung bei Ansprechen der Sicherung außer Betrieb - unabhängig davon, ob ein Schaden durch den Strörungszustand eingetreten ist oder nicht. Eine derartige Art der "Störungsregistrierung" ist insoweit unzweckmäßig, als eine weitgehende Aufrechterhaltung des Betriebs bei solchen Störungen angestrebt wird, die nicht zu Ausfällen führen.

Ferner sind auch Registriergeräte für (ausschließlich leitungsgebundene) Störungen bekannt, welche - insbesondere im Bereich der Elektrizitätsversorgungsunternehmen - auf Leitungen auftretende Störspitzen fortlaufend registrieren, um bei eventuellen Ausfällen die Störungsursache eingrenzen zu können, siehe z.B. PAJ, vol. 13, no. 5 (E-701), 1. September 1989 & JP-A-63 215 217.

Als nicht leitungsgebundene Störungen können verschiedene Arten von Einwirkungen in Betracht kommen. Diese basieren insgesamt auf entweder magnetischen oder elektrischen Feldern bzw. Kombinationen davon. Hierbei können viele Störungen auch von Nachbargeräten ausgehen. Die Probleme der gegenseitigen Einwirkung von elektrischen oder elektronischen Geräten untereinander werden unter dem Begriff "elektromagnetische Vertraglichkeit" behandelt.

Zwar müssen elektronische Geräte so dimensioniert sein, daß ihre Funktion durch Funkstörungen, denen sie ausgesetzt werden können, möglichst wenig gestört oder verändert wird, wofür Grenzwerte für die elektrische und magnetische Feldstärke angegeben werden. Typisch sind im Frequenzbereich 0,1 MHz < f < 30 MHz 1 V/m und im Bereich 30 MHz < f < 790 MHz 0,1 V/m für die elektrische Feldstärke und 4 A/m für die magnetische Feldstärke, gemessen jeweils in einem Abstand von 0,1 m vom betreffenden Gerät.

Aber insbesondere durch externe elektrostatische Entladungen oder Schaltvorgänge außerhalb des zu überwachenden Gerätes treten Störspannungen mit einem relativ breiten Spektrum auf. Eine solche Folge kurzer und steiler Impulse kann insbesondere in prozessorgesteuerten Abläufen zu Fehlfunktionen führen. Begrenzte Abhilfe schaffen zwar in der Regel Filter, deren Dämpfung dem Frequenzverlauf der Störspannung angepaßt ist. Bei prozessorgesteuerten Systemen können derartige Einflüsse jedoch nicht mit vollständiger Sicherheit ausgeschlossen werden und durch äußere Störungen hervorgerufene Fehlsteuerungen können vielfach zu unvorhersehbaren Folgefehlern führen, deren Auswirkungen - einschließlich des so hervorgerufenen Schadens - im Einzelfall kaum abgeschätzt werden können.

Wenn eine Einwirkung einer äußeren elektromagnetischen Störung auf die zu komplexen elektronischen Schaltungen der Baugruppen führenden Leitungen vorliegt, wird der mit der Störung verbundene Ausfall häufig zu einem Versicherungsfall. Ob dieses Störsignal aus dem Gerät selbst oder von außerhalb kam, ist aber bisher nachträglich nicht mehr feststellbar.

Der Erfindung liegt die Aufgabe zugrunde, bei einer Schaltung der eingangs genannten Gattung auch bei nicht leitergebundenen Störsignalen die Möglichkeit zu schaffen, nach einem aufgetretenen Störfall eine genaue Aussage über dessen Ursache zu treffen.

Diese Aufgabe unterscheidet sich grundsätzlich beispielsweise von derjenigen, die einer aus der DD 279 083 Al bekannten gattungsfremden Schaltungsanordnung zugrundeliegt, bei der Takt- oder Setzeingang eines Flipflops, welches gleiches oder ähnliches Störverhalten zeigt, wie die Bauelemente der zu prüfenden Baugruppe, mit der abgreifbaren Störspannung beschaltet ist. Diese Schaltung dient nicht zur Diskriminierung einer im Betrieb auftretenden Störeinwirkung, sondern zur Überprüfung der elektromagnetischen Abschirmung des betreffenden Geräts, in dem versucht wird, durch Einbringung einer Störeinwirkung, deren Einwirkung auf eine Testbaugruppe festzustellen, um daraus dann Rückschlüsse auf das Verhalten anderer Baugruppen zu ziehen.

Die vorgenannte Aufgabe wird mit den kennzeichnenden Merkmalen des Anspruchs 1 gelöst.

Die Erfindung schließt die Erkenntnis ein, daß zur beweissichernden Störerfassung eine feste Zuordnung zwischen Sensor, zu überwachender Baugruppe und Richtung der Störungseinstrahlung bestehen muß. Damit ist sichergestellt, daß die Art und Richtung der Störeinwirkung jederzeit auch noch nachträglich erschlossen werden kann. Bei jeder Art von relativ zur Baugruppe beweglichem Sensor könnte nachträglich beispielsweise keine Aussage mehr über die Art des eingestreuten nicht leitergebundenen Signals getroffen werden, da die Richtung des eingestrahlten Signals in Bezug auf die betreffende Baugruppe nicht reproduzierbar ist. Ferner muß der Sensor bereits auf solche Störstrahlungen ansprechen, die zu Störungszuständen führen könnten und nicht erst bei solchen Störpegeln, die mit großer Sicherheit zu Störzuständen in der zu überwachenden Baugruppe führen.

Des weiteren ist von besonderer Bedeutung, daß die erkannte und registrierte Störung nicht von der weiteren Signalverarbeitung durch die elektronische Schaltung der zu überwachenden Baugruppe nachträglich veränderbar ist. Da diese durch die Störung in seiner Arbeitsweise beeinträchtigt ist, würde mit großer Wahrscheinlichkeit auch die Störmeldung fehlerhaft behandelt werden, so daß deren Zuverlässigkeit in Frage gestellt ist.

Statt einer Registrierung, beispielsweise durch einen mit der Arbeit des Prozessors zusammenhängenden Datenverarbeitungsvorgang, wird die Störmeldung in einem bistabilen Register festgehalten, welches vom Sensor direkt über hardwaremäßig verknüpfte Schaltungen angesprochen wird. Hierzu werden bevorzugt diskrete Logikbaugruppen verwendet. Als bistabile Register können auch elektromechanische Bauelemente Verwendung finden. Wichtig ist dabei insbesondere, daß diese Baugruppen getrennt von den übrigen Schaltungsteilen, deren Funktion von der Störung beeinträchtigt ist, ab- oder auslesbar ist. Bei mehreren mit unterschiedlichen Empfindlichkeitspegeln versehenen Sensoren oder mehreren in einem Sensor parallel angeordneten Diskriminatoren mit unterschiedlichen Empfindlichkeitsstufen ist bevorzugt der oder dem Sensor bzw. Diskriminator mit einer niedrigeren Empfindlichkeitsschwelle zugeordneten Speicherelement eine Anzeigevorrichtung nachgeschaltet, welche eine Warnanzeige im Hinblick auf Störungen bildet, die noch nicht zu einem Ausfall des Systems geführt haben.

Als Sensoren sind sämtliche Aufnehmer für nicht leitungsgebundene Störungen geeignet, welche dabei jeweils an die wahrscheinlichste oder die erwartete Störung durch entsprechende Auswahl selektiv anpaßbar sind.

Hierbei kommen insbesondere als Antennen für elektromagnetische Felder geeignete Leiterschleifen, potentialmäßig getrennte Punkte zur Aufnahme elektrischer Felder oder Hall-Sonden zur Erfassung magnetischer Felder, welche die Störung hervorgerufen haben könnten, in Betracht.

Gemäß einer bevorzugten Weiterbildung der Erfindung ist der Sensor in einem peripheren Bereich der Leiterplatte angebracht, welche im Falle mehrerer Sensoren einen im wesentlichen lückenlos aneinandergrenzenden, die Baugruppe mindestens teilweise umgebenden Erfassungsbereich erzeugen. Wenn zusätzlich eine Abschirmung vorgesehen ist, welche den Erfassungsbereich des Sensors oder der Sensoren zur Baugruppe selbst hin abschirmen, ist eine Selektivität hinsichtlich Störungen mit externer Ursache gegeben, so daß ausschließlich außerhalb der betreffenden Baugruppe erzeugte Störungen erfaßbar sind.

Bei einer anderen günstigen Ausführung ist der Sensor durch mindestens eine Leiterbahn einer die Baugruppe tragenden Platine gebildet oder als Hall-Sonde ausgestaltet.

Wenn die die Platine umlaufende Leiterbahn eine vollständige, beidseitig an einen nachgeschalteten Diskriminator angeschlossene Windung bildet, können die von dieser Schleife erfaßten elektromagnetischen Felder nach verschiedenen Kriterien bewertet werden. Diese Anordnung ist besonders geeignet für Multilayer-Platinen, bei denen sich durch Hintereinanderschaltung einer Anzahl die Platine in verschiedenen Leiterebenen umlaufenden Windungen die Empfindlichkeit bei der Störungserfassung wesentlich heraufsetzen läßt.

Die Leiterbahnen, die als Antenne dienen, sind jeweils über ein Koppelglied mit mindestens einem Diskriminator verbunden. Eine als Antenne wirkende Leiterbahn verläuft insbesondere entlang der Außenkante der Platine auf oder in dem Basismaterial mit einer als Abschirmung wirkenden, Massepotential führenden Leiterbahn.

Vorzugsweise wird eine Leiterbahn entlang der Außenkante der Platine über einen Kondensator mit einem Eingang und dem Abgriff eines Spannungsteilers des aus einem Schmitt-Trigger oder schnellen Schwellwertschalters bzw. aus Komparatoren bestehenden Diskriminators verbunden.

In einer Weiterbildung der Schaltung zur Störungserfassung sind die Diskriminatoren über eine Auswerteschaltung mit einem Speicher verbunden. Dazu ist insbesondere eine Leiterbahn entlang der Außenkante und eine Anzahl Leiterbahnen auf und/oder in dem Basismaterial der Platine vorgesehen, um eine elektronische Schaltung auf Störstrahlung zu überwachen, wobei die Auswerteschaltung mindestens einen Vergleicher und eine Zeitgeberschaltung enthält, die im Störungsfall die Einspeicherung von Störungsdaten in den Speicher jeweils in Zuordnung zum Zeitpunkt des Auftretens der Störung vornimmt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 ein erstes bevorzugtes Ausführungsbeispiel der erfindungsgemäßen Schaltung,
Figur 2 ein zweites Ausführungsbeispiel der erfindungsgemäßen Schaltung sowie
Figur 3 ein drittes, komplexer ausgestaltes, Ausführungsbeispiel.

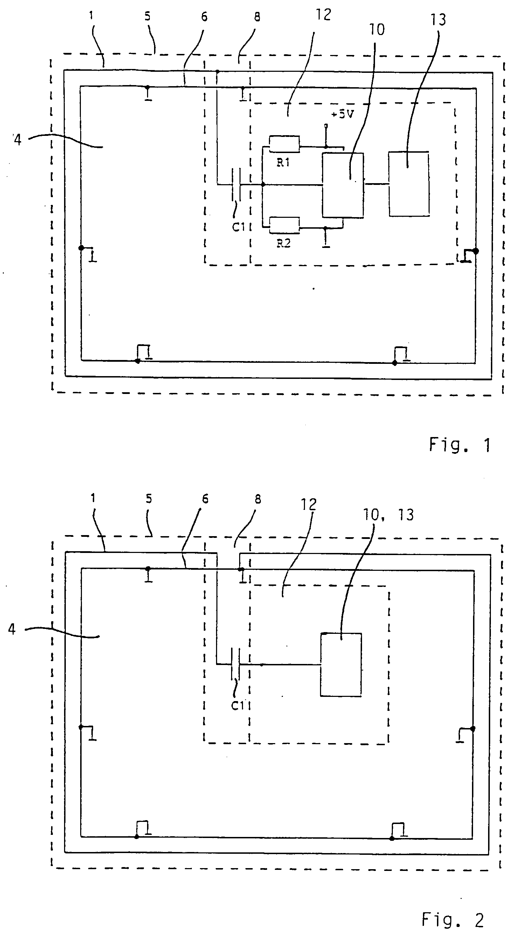

Bei dem in Figur 1 dargestellten ersten Ausführungsbeispiel handelt es sich um einen Schaltung zur Störungserfassung für eine prozessorgesteuerte elektronische Baugruppe. Durch eine den Sensor bildende Leiterbahn 1, die sich entlang der Außenkante der - gestrichelt in ihren Umrissen dargestellten - Platine 5 in deren peripherem Bereich erstreckt, wird die erforderliche feste räumliche Zuordnung des Sensors erreicht, wobei die Leiterbahn 1 auf der Platine zusammen mit den übrigen Leiterbahnen erzeugt wurde - infolgedessen in derselben Ebene verläuft und bevorzugt eine Windung bildet. Im wesentlichen parallel zu der Leiterbahn 1 ist - zur zu überwachenden Baugruppe hin gerichtet - nach innen als Abschirmung gegen die eigene Abstrahlung der zu überwachenden Baugruppe selbst eine Massepotential führende Leiterbahn 6 angeordnet, mit welcher die Richtungserkennbarkeit der externen, d.h. nicht leitungsgebundenen Störung zusätzlich verbessert wird. Die zu überwachende Baugruppe selbst ist durch den gestrichelt dargestellten Bereich 4 repräsentiert und kann mit ihren Bauelementen beliebig innerhalb der Schleife 1 angeordnet sein.

Mittels eines, durch einen Kondensator Cl gebildeten, Koppelgliedes 8 wird das durch die eine Antenne bildende und als geschlossene Schleife verlaufende Leiterbahn 1 aufgenommene Signal an die nachfolgende Schaltung ausgekoppelt. Zur Bewertung des Signals ist ein Diskriminator 10 nachgeschaltet, der als Schwellwertschaltung ausgebildet ist. Der Eingang des Diskriminators 10 ist über einen durch zwei zwischen den Anschlüssen der Spannungsversorgung in Serie geschalteten Widerstände R1 und R2 gebildeten Spannungsteiler zentriert.

Dem Diskriminator ist ein bistabiles Speicherelement eines Speichers 13 mit einem zugehörigen Anzeigeelement, das beispielsweise in Form einer LED- oder LCD-Anzeige ausgestaltet - und in der Zeichnung nicht näher dargestellt - ist, nachgeschaltet. Überschreitet das Signal einen einstellbaren Schwellwert bzw. Sollwertpegel, wird dieser Zustand im bistabilen Speicherelement festgehalten. Mit dem Anzeigeelement wird damit ein eingetretener Störungszustand so lange signalisiert, bis das bistabile Speicherelement durch externe Mittel zurückgesetzt wird. Der Diskriminator 10 ist mit der Speicherschaltung 13 in Figur 1 zu der gestrichelt umrahmten Auswerteschaltung 12 zusammengefaßt.

Bei der in Figur 2 dargestellten Schaltung ist eine Variante des in Figur 1 dargestellten Ausführungsbeispiels wiedergegeben.

Der als Antenne ausgebildete Sensor, der in Form einer Leiterbahn 1 die Platine umläuft, ist hierbei als offene Schleife ausgebildet, die einseitig mit Bezugsmasse verbunden ist. Am anderen - offenen - Ende der Antenne erfolgt mit dem Koppelglied 8 die kapazitive Auskopplung des Signals. Das Auskoppelglied 8 ist mit seinem anderen Pol mit dem Diskriminator 10 verbunden. Die übrige Schaltung ist entsprechend der Ausführung gemäß Figur 1 ausgestaltet.

Auf gleiche Weise können auf einer Platine mehrere hinsichtlich der Störeinflüsse getrennt zu überwachende Schaltungen vorgesehen sein, welche getrennte Sensoren und Auswerteschaltungen enthalten. Hierbei können dann jeweils mehrere gestrichelt umrandete Bereiche 5 entsprechend der Darstellung gemäß Figuren 1 oder 2 kaskadiert werden, so daß die Störeinflüsse für die jeweiligen Bereiche getrennt überwacht werden können.

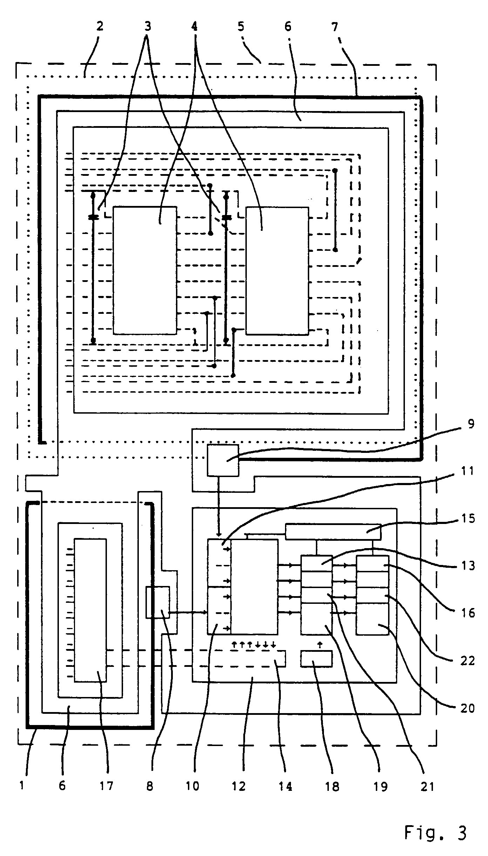

Figur 3 zeigt ein drittes, komplexer ausgestaltes, Ausführungsbeispiel der erfindungsgemäßen Schaltung zur Störungserfassung für eine prozessorgesteuerte elektronische Baugruppe und mit Mitteln zum Festhalten dieses Zustands für eine nachträgliche Auswertung.

Ein erster Sensor besteht hierbei aus Leiterbahnen 2 und 7, die auf der Platine verlaufen und nach innen als Abschirmung eine auf Massepotential gehaltene Leiterbahn 6 aufweisen, dem Koppelglied 9 und dem Diskriminator 11. Die Leiterbahnen 2 verlaufen in mehreren Schichten einer Multilayer-Platine, wobei die nicht im Bereich der Oberfläche gelegenen Bahnen in der Zeichnung punktiert wiedergegeben sind.

Zwei zu überwachende elektronische Baugruppen in Form von integrierten Schaltungen 4 sind bei dem dargestellten Ausführungsbeispiel gegebenenfalls mit einer zusätzlichen Abschirmung in Form einer - nicht dargestellten - metallischen Kapselung versehen. Diese Abschirmung wäre dann galvanisch mit der Masseleiterbahn 6 verbunden. Die elektronische Baugruppe ist als Schaltung mit zwei Siebkondensatoren 3 für die Anschlüsse der Betriebsspannung der integrierten Schaltungen 4 auf einer Multilayerplatine 5 dargestellt. Anstelle einer Anzahl von Leiterbahnen 7 in der oberen Ebene und einer Anzahl von Leiterbahnen 2 in der unteren Ebene, welche mittels einer Drahtbrücke an der Steckseite der Platine oder mittels Durchkontaktierung zu einer Wicklung mit mindestens einer Windung verschaltet sind, kann bedarfsweise auch eine einzige Leiterbahn 7 eingesetzt werden, wobei die die Multilayerplatine 5 umlaufende Leiterbahn 7 eine vollständige, beidseitig an den nachgeschalteten Diskriminator 11 angeschlossene Windung bildet.

Dem Diskriminator 11 ist in der Auswerteschaltung 12 ein Speicher 13 und mindestens ein Anzeigeelement einer Anzeigevorrichtung 16 für den Störzustand, insbesondere in Form einer LED- oder LCD-Anzeige, nachgeschaltet.

Ein Prozessor 17 ist einerseits, beispielsweise über eine steckerseitige Schnittstelle, mit der prozessorgesteuerten elektronischen Baugruppe und andererseits zum Festhalten der Störung und zur gleichzeitigen Registrierung der Uhrzeit über einen Datenbus 14 mit der Auswerteschaltung 12 verbunden, wobei unabhängig von den vom Prozessor 17 ausgelösten Datenoperationen eine Registrierung der Störungen in Zuordnung zum Zeitpunkt des Auftretens der Störung erfolgt und jedes Speicherelement des Speichers 13 auslesbar und gegebenenfalls rücksetzbar ist. In der Figur 3 ist der Prozessor 17 zwar als Bestandteil dieser Schaltung auf derselben Platine dargestellt, dieser kann aber entsprechend auch separat auf einer anderen Platine angeordnet sein.

Die durch die Leiterschleifen gebildeten Antennen 1,2 und 7 empfangen die Störstrahlungen und übertragen diese über induktiv oder kapazitiv mit diesen gekoppelte Auskoppelschaltungen 8, 9 an die Diskriminatoren 10, 11. Ein analoges Signal, das von der Antenne 2 oder 7 an der Peripherie der Leiterplatte 5 stammt, wird dabei dem ersten schnellen Diskriminator 11 zugeführt, der aus mindestens einem Schmitt-Trigger oder schnellen Schwellwertschalter bzw. Komparator besteht und auf einen einstellbaren Störpegel anspricht. Die Ansprechschwelle liegt dabei unterhalb des Störpegels, für den Störungen für die Baugruppen 4 befürchtet werden müssen. Am Eingang eines zweiten schnellen Diskriminators 10 liegt ein weiteres analoges Signal an, das von einer zweiten Antenne 1 stammt, die die zweite Baugruppe 17 umgibt. Der zweite Diskriminator 10 ist dabei entsprechend dem ersten Diskriminator 11 aufgebaut. Hierbei können Störeinwirkungen auch diskriminiert werden, welche sich für die unterschiedlichen Bereiche der Platine mit unterschiedlicher Intensität auswirken.

Das für die Störmeldung kennzeichnende Bit wird erfindungsgemäß in einem bistabilen Register festgehalten, welches vom Sensor direkt über hardwaremäßig verknüpfte Schaltungen angesprochen wird, wozu bevorzugt diskrete Logikbaugruppen verwendet werden. Als bistabile Register können elektronische oder auch elektromechanische Bauelemente Verwendung finden.

Ein Störpegel, der größer als der eingestellte Sollwert ist, wird als Störwertbit der Auswerteschaltung 12 zur Überwachung zugeleitet und in einem Speicher 13, beispielsweise in einem bistabilen Register, in Zuordnung zu einer von einer nicht dargestellten Zeitgebereinheit erhaltenen Uhrzeitangabe festgehalten. In vorteilhafter Weise kann dabei ein Schieberegister eingesetzt werden, so daß bei Abbruch der Einspeicherung, insbesondere nach dem Ausfall des Systems, die Störwertbits, die zur entscheidenden Störung geführt hatten, zusammen mit den zugehörigen Werten der Uhrzeit nach seriellem Auslesen ausgewertet werden können, wodurch die Ursache der Störung rekonstruierbar wird.

In der bevorzugten Schaltung gemäß Figur 3, weist jeder Diskriminator 10, 11 zwei oder mehr Empfindlichkeitsstufen auf, die jeweils zu einem unterschiedlichen Ausgangssignal führen. Das Ansprechen der jeweiligen Empfindlichkeitsstufe eines Diskriminators wird dabei ebenfalls in Zuordnung zu der Zeitangabe des Auftretens festgehalten, so daß ein Störzustand mit wechselnder Intensität nachträglich in seinem zeitlichen Verhalten verfolgt werden kann, um die Fehleranalyse zu unterstützen. Dabei wird bei der Registrierung jedem Störwertbit eine Uhrzeit zugeordnet. Das wird durch Speicherelemente 19 bzw. Schieberegister für jede zu registrierende Störwertinformation und Speicherelemente 21 für die aktuelle Uhrzeit erreicht. Die unabhängig vom Prozessor 17 erzeugte Uhrzeit und die Fehlerregistrierung, können dabei nicht vom Prozessor 17 gelöscht werden. Zur Rücksetzung der Fehlerangaben im Speicher 13 dient eine gesonderte Rücksetzeinrichtung 18.

Die Auswerteschaltung 12 enthält mindestens einen Vergleicher. Wird dem Vergleicher ein Systemausfall signalisiert, so wird in den Speicherelementen 21 die Uhrzeit, die über eine zusätzliche Anzeige 22 ausgegeben werden kann, gespeichert. Damit wird die Fehlereinspeicherung beendet, wobei sich der Zeitpunkt des Systemausfalls in jedem Schieberegister an der gleichen Stelle befindet und wobei außerdem die Störwertbits vor diesem Zeitpunkt registriert bleiben.

In weiterer Ausgestaltung enthält die Auswerteschaltung 12 neben dem Vergleicher auch eine Zeitschaltung, an deren Eingang ein von einem BUS 14 übertragenes Taktsignal T liegt.

Über den BUS 14 kann sowohl die Zeitschaltung gesteuert bzw. abgefragt werden als auch die Störung der Arbeit des Gerätes bzw. des Systems oder von Teilen desselben dem Vergleicher angezeigt werden, der die Überwachung auf externe nicht leitungsgebundene Störungen, die zum Systemausfall führen, durchführt. Gegebenenfalls kann über den BUS 14 die aktuelle Uhrzeit übertragen und die in einem der Auswerteschaltung 12 nachgeordnetem digitalen Speicher 13 gespeicherten Störinformation, insbesondere Störungen betreffend, welche nicht zum Systemausfall, sondern nur zu einer Warnanzeige führen, abgefragt werden. Hierzu dient eine weitere in der Figur 3 nicht gezeigte Verbindung des Speichers 13 mit dem BUS 14.

Falls dem Vergleicher ein Systemausfall signalisiert, wird in die Speicherelemente 21 die Uhrzeit, die über eine zusätzliche Anzeige 22 ausgegeben werden kann, gespeichert. Die Fehlereinspeicherung wird mittels der Zeitschaltung nach Ablauf einer voreinstellbaren Zeit beendet, wobei sich der Zeitpunkt des Systemausfalls in jedem Schieberegister an der gleichen Position befindet. Die Einspeicherung in das Schieberegister wird synchron mit dem Taktsignal T fortgeführt, wodurch außer den Störwertbits vor diesem Zeitpunkt auch jene Störungen, die nach diesem Zeitpunkt auftreten, registriert werden.

Für Sicherstellung einer unabhängigen Funktion der Bausteine 10 bis 13, 16 und 20 ist eine interne Energiequelle 15, vorzugsweise eine Langzeitbatterie oder ein Akkumulator, angeordnet.

In einer anderen bevorzugten Variante enthält die Zeitschaltung einen Uhrenschaltkreis und einen nach Störungsbeseitigung rücksetzbaren Zähler, der im zum Systemausfall führenden Störungsfall bis zu einer voreingestellten Zahl zählt und dann die Einspeicherung von Störungswerten und der zugehörigen Uhrzeit in den Speicher 13 unterbricht.

In anderen Weiterbildungen der Erfindung können weitere den aufzunehmenden nicht leitungsgebundenen Störungen speziell angepaßte Sensoren verwendet werden. So können beispielsweise - jeweils im Hinblick auf spezielle Anforderungen - die Antenne durch eine andere geeignete Anordnung der Leiterbahnen, die Auswerteschaltung oder der Speicher als integrierte Schaltung unmittelbar auf der Leiterplatte oder auch extern in verschiedenen Formen ausgeführt werden.

Die Erfindung beschränkt sich in ihrer Ausführung nicht auf das vorstehend angegebene bevorzugte Ausführungsbeispiel. Vielmehr ist im durch die Ansprüche gesteckten Rahmen eine Anzahl von Varianten denkbar, welche von der dargestellten Lösung auch bei grundsätzlich anders gearteten Ausführungen Gebrauch macht.

## Patentansprüche

1. Schaltung zur Erfassung von eine elektronische Baugruppe (4;17) beeinträchtigenden externen Störungen und zum Festhalten einer erfaßten Störung zur nachträglichen Auswertung im Falle eines in der Baugruppe aufgetretenen Störzustands,
**dadurch gekennzeichnet**,
daß mindestens ein Sensor (1;2,7) für nicht leitungsgebundene elektrische und/oder magnetische Störungen vorgesehen ist, dem ein Diskriminator (10;11) einer Auswerteschaltung (12) nachgeschaltet ist, der bei Erfassung einer einen vorgegebenen Pegel überschreitenden Störung ein Ausgangssignal abgibt,
daß der Sensor (1;2,7) in fester räumlicher Zuordnung mit der Baugruppe (4;17) mechanisch verbunden ist,
daß dem Diskriminator (10;11) ein bistabiles Speicherelement (13) nachgeschaltet ist, welches durch das Ausgangssignal des Diskriminators in einen dem Auftreten einer Störung zugeordneten Signalzustand setzbar ist,
daß das Speicherelement (13) unabhängig von den in der übrigen elektronischen Baugruppe ausgelösten Schaltvorgängen ausles- und gegebenenfalls rücksetzbar ist und
daß zwecks Entscheidung, ob eine externe Störung zu einem Störungszustand der Baugruppe geführt hat, der Pegel, bei dessen Überschreitung der Diskriminator (10;11) anspricht, geringer gewählt ist als der Pegel, welcher von der geringsten Störung hervorgerufen wird, bei dem eine Beeinträchtigung der Baugrup (4;17) zu erwarten ist.

2. Schaltung nach Anspruch 1, **dadurch gekennzeichnet**, daß sich der Sensor (1;2,7) im peripheren Bereich der die Baugruppe (4;17) tragenden Platine (5) erstreckt.

3. Schaltung nach einem der vorangehenden Ansprüche, **dadurch gekennzeichnet**, daß mehrere Sensoren (2;7) jeweils unterschiedlichen Baugruppen (4;17) zugeordnet sind, wobei sich der jeweils einer Baugruppe zugeordnete Sensor in einem Platinenbereich befindet, der jeweils peripher zu der betreffenden Baugruppe gelegen ist und insbesondere eine Abschirmung (6) in Richtung auf die Baugruppe selbst vorgesehen ist.

4. Schaltung nach einem der vorangehenden Ansprüche, **dadurch gekennzeichnet**, daß der Sensor durch mindestens eine Leiterbahn (1;2,7) der die Baugruppe tragenden Platine (5) gebildet wird oder als Hall-Sonde ausgestaltet ist.

5. Schaltung nach Anspruch 4, **dadurch gekennzeichnet**, daß die Leiterbahn (1, 2, 7) die Platine (5) umlaufend ausgebildet ist, die eine vollständige, insbesondere beidseitig an die nachgeschaltete Auswerteschaltung (12) angeschlossene, Windung bildet.

6. Schaltung nach Anspruch 4, **dadurch gekennzeichnet**, daß eine Anzahl von Leiterbahnen (1, 2, 7) auf und/oder innerhalb der als Multilayerplatine ausgebildeten Platine (5) vorgesehen ist, welche zu einer aus mehreren Windungen bestehenden Leiterschleife zusammengeschaltet sind oder einzeln jeweils eine Windung bilden und jeweils mit getrennten Auswerteschaltungen verbunden sind.

7. Schaltung nach Anspruch 4, **dadurch gekennzeichnet**, daß parallel zu der einem in Bezug auf die Baugruppe in einem peripheren Bereich verlaufenden Leiterbahn (1, 2, 7) an der der Baugruppe zugewandten Seite als Abschirmung eine auf einem festen Potential gehaltene Leiterbahn (6) vorgesehen ist.

8. Schaltung nach einem der vorangehenden Ansprüche, **dadurch gekennzeichnet**, daß Mittel zum Zuführen eines einer Zeitangabe entsprechenden Signals zu der Auswerteschaltung (12) vorgesehen sind oder daß die Auswerteschaltung (12) einen Zeitgeberschaltkreis enthält, und daß das der Zeitangabe entsprechende Signal in einem Speicher (13) jeweils in Zuordnung zu dem einen Störungszustand kennzeichnendes Signal festgehalten wird.

9. Schaltung nach einem der vorangehenden Ansprüche, **dadurch gekennzeichnet**, daß mehrere Sensoren für unterschiedliche Empfindlichkeitsstufen oder Sensoren (2,7) mit parallel angeordneten Diskriminatoren (10;11) unterschiedlicher Empfindlichkeitsstufen vorgesehen sind, von denen bei Überschreitung des jeweiligen Pegels durch die Störung entsprechende der jeweiligen Störungsintensität zugeordnete Signale an unterschiedliche Speicherelemente (19) ausgegeben werden, welche die für die Störungen unterschiedlicher Intensität kennzeichnenden Signale festhalten.

## Claims

1. A circuit for detection of external interferences affecting an electronic component (4; 17), and for storing a detected interference for subsequent evaluation in the case of an interference condition occurring in the component,
characterised in that
at least one sensor (1; 2, 7) is provided for non-conducted electrical and/or magnetic interferences, downstream of which is connected a discriminator (10; 11) of an evaluation circuit (12) which gives an output signal on detecting an interference which exceeds a predetermined level,
that the sensor (1; 2, 7) is mechanically connected to the component (4; 17) in a fixed spatial relation,
that a bistable storage element (13) is connected downstream of the discriminator (10; 11), which can be set in a signal condition associated with the occurrence of an interference by the output signal of the discriminator,
that the storage element (13) can be set and, if necessary, reset independently of the switching processes carried out in the rest of the electronic component and
that for the purpose of deciding whether an external interference has caused the interference condition of the component, the level at which the discriminator (10; 11) is activated is selected to be lower than the level evoked by the smallest interference at which the component is to be expected to be affected.

2. Circuit according to claim 1, characterised in that the sensor (1; 2, 7) extends in the peripheral region of the circuit board (5) which carries the component (4; 17).

3. Circuit according to one of the preceding claims, characterised in that a plurality of sensors (2; 7) are each associated with different components (4; 17), whereby the sensor associated with each component is disposed in an area of the circuit board which is peripheral to the component in question, and that especially a shield (6) is provided towards the component itself.

4. Circuit according to one of the preceding claims, characterised in that the sensor is formed from at least one track (1; 2, 7) of the circuit board (5) carrying the component, or from a Hall probe.

5. Circuit according to claim 4, characterised in that the circuit track (1, 2, 7) is formed to surround the circuit board (5), forming a complete loop, especially connected on both sides to the downstream-connected evaluation circuit.

6. Circuit according to claim 4, characterised in that a number of circuit tracks (1, 2, 7) are provided on and/or within the circuit board (5) which is formed as a multi-layer circuit board, which are connected together to a conductor track comprising a plurality of loops, or which each individually form a loop and are each connected to separate evaluation circuits.

7. Circuit according to claim 4, characterised in that parallel to the circuit track (1, 2, 7) running in a peripheral region with respect to the component, a circuit track (6) which is held at a fixed potential is provided as shielding on the side nearer the component.

8. Circuit according to one of the preceding claims, characterised in that means are provided to supply a time signal to the evaluation circuit (12), or that the evaluation circuit (12) contains a clock circuit, and that the time signal is held in a store (13) corresponding to the signal characterising an interference condition.

9. Circuit according to one of the preceding claims, characterised in that a plurality of sensors for differing sensitivity levels, or sensors (2, 7) with parallel discriminators (10, 11) of differing sensitivity levels, are provided, from which, on the interference exceeding the respective level, corresponding signals associated with the respective interference intensity are sent to different storage elements (19) which store the characterising signals for the interferences of differing intensity.

## Revendications

1. Circuit de détection de parasites extérieurs perturbant un groupe électronique et en vue de la mémorisation d'un parasite détecté en vue d'une évaluation ultérieure dans le cas d'un état de perturbation apparu dans le groupe,
Caractérisé en ce qu'au moins un capteur (1; 2, 7) est prévu pour des parasites électriques et/ou magnétiques non liés à la conduction, en aval duquel est disposé un discriminateur (10; 11) d'un circuit d'évaluation (12), qui, dans le cas d'une détection d'un parasite excédant un niveau prescrit délivre un signal de sortie,
En ce que le capteur (1; 2, 7) est relié mécaniquement en association spatiale fixe avec le groupe (4; 17),
En ce qu'en aval du discriminateur (10; 11) est disposé un élément de mémoire bistable (13), qui peut changer d'état par le signal de sortie du discriminateur dans un état de signal associé à l'apparition d'un parasite,
En ce que l'élément de mémoire (13) peut être lu et éventuellement ramené dans l'état initial indépendamment des opérations de commutation déclenchées dans le reste du groupe électronique, et
En ce qu'en vue de la décision, si un parasite extérieur a conduit à un état de perturbation du groupe, le niveau, au dépassement duquel répond le discriminateur (10; 11), est choisi plus faible que le niveau qui est provoqué par le parasite le plus faible, pour lequel une perturbation du groupe (4; 17) est à attendre.

2. Circuit selon la revendication 1, caractérisé en ce que le capteur (1; 2, 7) s'étend dans la région périphérique de la platine (5) supportant le groupe (4; 17).

3. Circuit selon une des revendications précédentes, caractérisé en ce que plusieurs capteurs (2; 7) sont associé respectivement à des groupes différents (4; 17), le capteur associé respectivement à un groupe se trouve dans un e région de la platine, qui est placée respectivement à la périphérie du groupe concerné et en particulier, un blindage (6) est prévu en direction du groupe lui-même.

4. Circuit selon une des revendications précédentes, caractérisé en ce que le capteur est formé par au moins une piste conductrice (1; 2, 7) de la platine (5) supportant le groupe ou est réalisé sous la forme d'une sonde de Hall.

5. Circuit selon la revendication 4, caractérisé en ce que la piste conductrice (1, 2, 7) est formée autour de la platine (5), qui forme une spire complète reliée en particulier bilatéralement au circuit d'évaluation (12) placé en aval.

6. Circuit selon la revendication 4, caractérisé en ce qu'une pluralité de pistes conductrices (1, 2, 7) est prévue sur et/ou à l'intérieur de la platine (5) réalisée à couches multiples, qui sont connectées à une boucle conductrice se composant de plusieurs spires ou forment isolément respectivement une spire et sont reliées respectivement à des circuits d'évaluation séparés.

7. Circuit selon la revendication 4, caractérisé en ce qu'en parallèle à la piste conductrice (1, 2, 7) s'étendant parallèlement par rapport au groupe dans une région périphérique, au côté tourné vers le groupe est prévue en tant que blindage une piste conductrice (6) maintenue à un potentiel fixe.

8. Circuit selon une des revendications précédentes, caractérisé en ce que des moyens pour l'application d'un signal correspondant à une indication de temps au circuit d'évaluation (12) sont prévus ou en ce que le circuit d'évaluation (12) contient une minuterie, et en ce que le signal correspondant à l'indication de temps est maintenu dans une mémoire (13) respectivement en association au signal caractérisant un état de perturbation.

9. Circuit selon, une des revendications précédentes, caractérisé en ce que plusieurs capteurs pour différents étages de sensibilité ou des capteurs (2, 7) avec des discriminateurs (10, 11) disposés en parallèle d'étages de sensibilités différents sont prévus, par lesquels, lors d'un dépassement du niveau respectivement par le parasite, des signaux associés correspondants à l'intensité de parasite respectif sont délivrés à différents éléments de mémoire (19), qui mémorisent les signaux caractérisant l'intensité différente des parasites.
